# EUROPÄISCHE PATENTSCHRIFT

(11) **EP 2 437 865 B1**
(45) Veröffentlichungstag und Bekanntmachung des Hinweises auf die Patenterteilung: **23.04.2014**
(21) Anmeldenummer: 10720302.8
(22) Anmeldetag: 02.06.2010
(51) Int. Cl.: B01D 35/31

(54) **FILTEREINRICHTUNG ZUR FLÜSSIGKEITSFILTERUNG**
FILTER DEVICE FOR FILTERING LIQUIDS
DISPOSITIF DE FILTRATION DESTINÉ À LA FILTRATION DE LIQUIDES

(30) Priorität: 04.06.2009 DE 102009023951
(43) Veröffentlichungstag der Anmeldung: 11.04.2012
(73) Patentinhaber: Mann + Hummel GmbH, 71638 Ludwigsburg (DE)
(72) Erfinder: KLEIN, Martin, 71634 Ludwigsburg (DE); PFLÜGER, Frank, 74343 Sachsenheim (DE); UDACHAN, Yashwant, 70499 Stuttgart (DE); GLÜCK, Oliver, 70499 Stuttgart (DE)
(86) Internationale Anmeldenummer: PCT/EP2010/057668
(87) Internationale Veröffentlichungsnummer: WO 2010/139706

(56) Entgegenhaltungen:
- EP-A1- 1 510 239
- EP-A1- 1 593 419
- EP-A2- 0 088 148
- US-A- 1 059 370
- US-A1- 2004 094 468

## Beschreibung

### Technisches Gebiet

Die Erfindung betrifft eine Filtereinrichtung zur Flüssigkeitsfilterung, umfassend: ein Filterelement mit einem Innenraum zur Aufnahme von Flüssigkeit, sowie mindestens einem Ausgleichselement aus elastisch deformierbarem Material zur Aufnahme eines sich beim Gefrieren der Flüssigkeit vergrößernden Flüssigkeitsvolumens. Derartige Filtereinrichtungen sind verschiedentlich bekannt und dienen z.B. zur Filterung von wässriger Harnstofflösung, die bei der Abgasbehandlung in Kraftfahrzeugen zur Reduktion von Stickoxidemissionen verwendet wird, oder zur Filterung von anderen, typischer Weise wässrigen Flüssigkeiten, z.B. von Kraftstoff-Wasser-Gemischen.

### Stand der Technik

Aus der DE 10 220 672 A ist eine Filtereinheit für gefrierende Flüssigkeiten, insbesondere für einen Dosierblock einer Abgasbehandlungseinheit, bekannt geworden. Die Filtereinheit weist mindestens einen Filtereinsatz auf, der in einem Gehäuse untergebracht ist, wobei der Filtereinsatz zumindest teilweise von einem elastisch verformbaren Mantelteil umgeben ist. Der elastisch verformbare Mantelteil soll hierbei die durch das Einfrieren hervorgerufene Volumenänderung der Flüssigkeit kompensieren, indem dieser dem Flüssigkeitsdruck unter elastischer Deformation nach außen ausweicht.

Die DE 103 40 123 A1 beschreibt eine Filtereinrichtung zur Flüssigkeitsfilterung, die ein in einem Filtergehäuse angeordnetes Filterelement aufweist, wobei in dem Filtergehäuse ein verformbares Ausdehnungselement (Deckel, Ring, Bodenscheibe) angeordnet ist, bei dessen Verformung das Volumen zumindest eines Abschnitts des Strömungswegs der zu filternden Flüssigkeit im Filtergehäuse änderbar ist. Das Ausdehnungselement kann z.B. in Form eines elastisch deformierbaren Deckels ausgebildet sein, der auf das Filterelement aufgesetzt wird und die Rohseite von der Reinseite der Filtereinrichtung separiert. Beim Gefrieren der Flüssigkeit in einem Einströmraum an der Rohseite wird der Deckel axial in Richtung eines Innenraumes des Filterelements verformt, so dass sich das Volumen des Einströmraums unter Reduzierung des in dem Innenraum zur Verfügung stehenden Volumens vergrößert. Aus der EP 0 088 148 A2 ist ein Filter zum Aufarbeiten von Öl mit einer zylindrischen, auswechselbaren Filterhülse und mit außen um die Filterhülse befestigtem Filtermaterial bekannt. In die Filterhülse ist eine elastische Hülse einsteckbar, deren Aussendurchmesser im entspannten Zustand nur wenig geringer ist als der Innendurchmesser der Filterhülse und deren Aussenumfang durch den im Inneren der elastischen Hülse angelegten Druck der zu filternden Flüssigkeit erweiterbar ist.

Es ist die Aufgabe der Erfindung, eine Filtereinrichtung der eingangs genannten Art dahingehend weiterzubilden, dass das Filterelement funktionssicher gegen den Eisdruck einer sich im Innenraum des Filterelements befindlichen Flüssigkeit geschützt werden kann.

### Offenbarung der Erfindung

Diese Aufgabe wird gelöst durch eine Filtereinrichtung der eingangs genannten Art, bei der das Ausgleichselement in dem Innenraum angeordnet ist und zwischen dem Ausgleichselement und dem Filterelement ein Spalt, insbesondere ein Ringspalt, für die Aufnahme der Flüssigkeit gebildet ist.

Erfindungsgemäß wird vorgeschlagen, in dem Innenraum ein Ausgleichselement anzuordnen, das bei der Ausdehnung der gefrierenden Flüssigkeit in dem Spalt zusammengedrückt wird, so dass die Volumenvergrößerung der Flüssigkeit im Wesentlichen durch eine Kompression, d.h. eine Verringerung des Eigenvolumens des Ausgleichselements aufgenommen werden kann. Das Ausgleichselement wird durch die gefrierende Flüssigkeit komprimiert, da in dem Innenraum kein Ausweichvolumen für das Ausgleichselement zur Verfügung steht.

Der Innenraum und das Ausgleichselement können z.B. zylinderförmig und mit geringfügig unterschiedlichen Durchmessern ausgebildet sein, so dass nach dem Einbringen des Ausgleichselements in den Innenraum ein Ringspalt zwischen der Mantelfläche des Ausgleichselements und der inneren Mantelfläche des ebenfalls zylindrischen Filterelements gebildet wird. Das elastisch deformierbare Material des Ausgleichselements kann hierbei z.B. aus Gummi, insbesondere aus einem Elastomer wie z.B. EPDM bestehen.

In einer Ausführungsform füllt das Ausgleichselement im undeformierten Zustand mindestens 40%, bevorzugt mindestens 80 % des Volumens des Innenraums aus. Auf diese Weise ist sichergestellt, dass das Flüssigkeitsvolumen in dem Innenraum und damit auch die Vergrößerung des Flüssigkeitsvolumens beim Gefrieren so gering ist, dass diese durch eine elastische Deformation (Kompression) des Ausgleichselements wirksam ausgeglichen werden kann. Die Deformation des Ausgleichselements kann hierbei sowohl in radialer Richtung als auch in axialer Richtung erfolgen, falls das Ausgleichselement sich nicht über die gesamte axiale Ausdehnung des Innenraums erstreckt, die der axialen Ausdehnung des Filterelements entspricht.

Erfindungsgemäß ist in dem Innenraum, insbesondere in dem Spalt, ein Stützkörper zur Abstützung des Filterelements angeordnet. Der Stützkörper ist hierbei zweckmäßiger Weise so ausgebildet, dass dieser sowohl eine axiale als auch eine radiale Strömung der Flüssigkeit durch den (Ring-)spalt zulässt.

Der Stützkörper ist als rohrförmiger Körper, insbesondere in Form eines Käfigs ausgebildet. Der rohrförmige Stützkörper umschließt hierbei typischer Weise das Ausgleichselement zumindest teilweise mantelseitig. Durch die Ausbildung des Stützkörpers in Form eines Käfigs kann trotz der Anordnung des Stützkörpers in dem Spalt sichergestellt werden, dass die Flüssigkeit mit dem Ausgleichselement unmittelbar in Kontakt steht, so dass dieses komprimiert werden kann. Der Käfig kann hierbei eine Mehrzahl von Streben aufweisen, die sich in Längsrichtung des Filterelements erstrecken und die Streben können über sich in radialer Richtung erstreckende Ringe miteinander verbunden sein. Der Stützkörper besteht hierbei in der Regel aus einem Kunststoff-Material und ist einteilig ausgebildet.

In einer Weiterbildung weist der insbesondere einteilige Stützkörper umfangsseitig eine sich über zumindest einen Teil der axialen Länge des Stützkörpers erstreckende Öffnung zum Einsetzen des Ausgleichselements auf. Beim Einsetzen des Ausgleichselements durch die Öffnung in den Stützkörper kann das Ausgleichselement elastisch komprimiert werden, so dass die Öffnung kleiner dimensioniert werden kann als die Kontur des Ausgleichselements im undeformierten Zustand.

Insbesondere kann sich die Öffnung in radialer Richtung über einen Winkelbereich von weniger als 270°, bevorzugt von weniger als 130° erstrecken. Selbst wenn der Durchmesser des Ausgleichselements im Wesentlichen dem Innendurchmesser des Stützkörpers entspricht, kann das Ausgleichselement unter elastischer Deformation durch die Öffnung in das Innere des Stützkörpers verbracht werden. Durch die verhältnismäßig geringe radiale Erstreckung der Öffnung kann hierbei sichergestellt werden, dass der Stützkörper seine stützende Funktion trotz der Öffnung möglichst gut erfüllt. In axialer Richtung kann die Öffnung der Länge des Ausgleichselements entsprechen oder ggf. kleiner dimensioniert sein. Es versteht sich, dass das Ausgleichselement auch durch eine stirnseitige Öffnung in den röhrenförmigen Stützkörper eingebracht werden kann, so dass auf das Vorsehen einer Öffnung an der Mantelseite des Stützkörpers verzichtet werden kann.

Bei einer Weiterbildung ist der Stützkörper aus mindestens zwei insbesondere in axialer Richtung oder in radialer Richtung aneinander befestigten Teilstücken zusammengesetzt. Die Teilstücke können hierbei insbesondere zwei Hälften des Stützkörpers bilden, die in axialer oder in radialer Richtung zusammengesteckt bzw. verrastet werden, indem an einem jeweiligen Teilstück angebrachte Nasen mit entsprechend geformten Nuten am jeweils anderen Teilstück in Eingriff gebracht werden. Die Nasen bzw. die zugehörigen Nuten können hierbei auf unterschiedliche Weise ausgestaltet sein, z.B. kreis- bzw. zylinderförmig, länglich, rechteck- bzw. quaderförmig oder rippenförmig.

In einer Weiterbildung weist der Stützkörper an zumindest einer Stirnseite, bevorzugt an beiden Stirnseiten eine Anlagefläche für das Ausgleichselement auf. Durch die Anlage des Ausgleichselements an den Anlageflächen kann dieses in axialer Richtung fixiert werden.

In einer weiteren Ausführung umfasst die Filtereinrichtung ein Gehäuse, in dem das Filterelement angeordnet ist. Um einen Eis-Ausgleich auch in einem zwischen dem Filterelement und dem Gehäuse gebildeten Volumen zur Aufnahme von Flüssigkeit herzustellen, kann zwischen dem Gehäuse und dem Filterelement ein weiteres Ausgleichselement aus einem elastisch deformierbaren Material angeordnet sein. Dieses kann ebenfalls durch die sich ausdehnende Flüssigkeit komprimiert werden, alternativ kann dieses aber auch als elastisch deformierbares Mantelteil ausgebildet sein, das dem Flüssigkeitsdruck unter elastischer Deformation nach außen ausweicht, wie in der eingangs zitierten DE 102 20 672 A1 beschrieben ist.

In einer weiteren Ausführungsform ist das Filterelement als (zylindrischer) Filterbalg ausgebildet. Der Filterbalg besteht hierbei typischer Weise aus plissiertem, zieharmonikaartig gefaltetem Filterpapier und ist hülsenartig ausgebildet.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

### Kurze Beschreibung der Zeichnungen

Ausführungsbeispiele sind in der schematischen Zeichnung dargestellt und werden in der nachfolgenden Beschreibung erläutert. Es zeigen:
Fig. 1 eine Ausführungsform der erfindungsgemäßen Filtereinrichtung in einem Teil-Längsschnitt,
Fig. 2 einen Längschnitt der Filtereinrichtung von Fig. 1 im Einbauzustand in einem Gehäuse,
Fig. 3a ein Detail des Stützkörpers der Filtereinrichtung von Fig. 1,
Fig. 3b ein Ausgleichselement zum Einsetzen in den Stützkörper von Fig. 3a,
Fign. 4a-c eine Ausführung des Stützkörpers mit zwei entlang der axialen Richtung des Stützkörpers aneinander befestigten Teilstücken, und
Fign. 5a-c eine weitere Ausführung des Stützkörpers mit zwei in radialer Richtung aneinander befestigten Teilstücken.

### Ausführungsform(en) der Erfindung

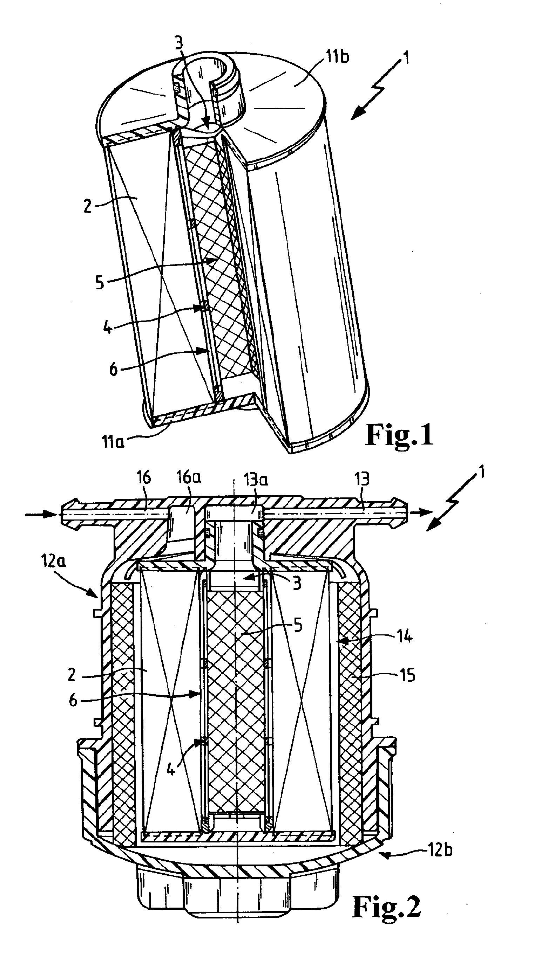

Die in Fig. 1 dargestellte Filtereinrichtung 1 weist ein zylindrisches, kreisringförmiges Filterelement 2 in Form eines Filterbalgs auf. In dem Filterelement 2 ist ein zylindrischer Innenraum 3 gebildet, in den ein sich über die axiale Länge des Filterelements 2 erstreckender, röhrenförmiger Stützkörper 4 von ebenfalls zylindrischer Geometrie eingesetzt ist. Im Inneren des Stützkörpers 4 ist ein zylinderförmiges Ausgleichselement 5 angeordnet, das aus einem elastisch deformierbaren Material, z.B. einem Elastomer (Gummi), besteht. Zwischen dem Ausgleichselement 5 und dem Filterelement 2 ist ein Ringspalt 6 gebildet, in dem der Stützkörper 4 angeordnet ist.

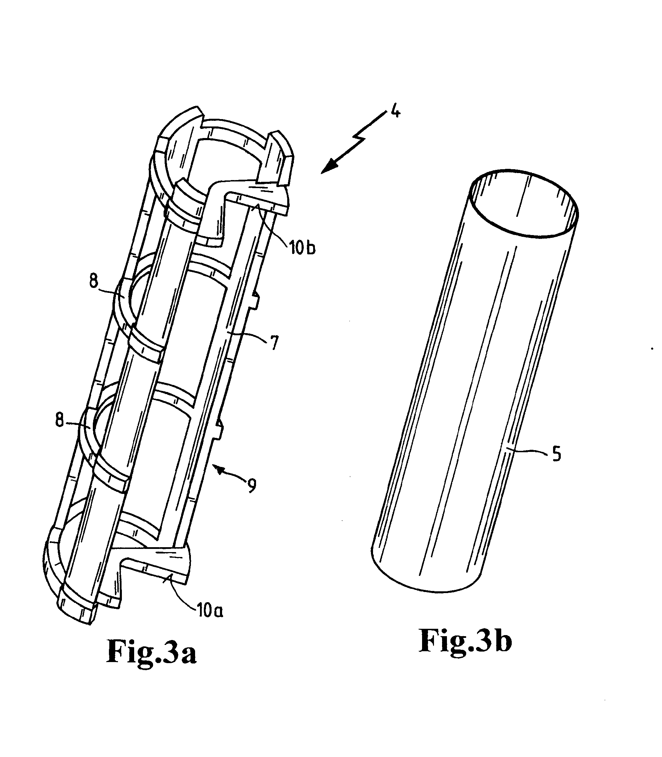

Der Stützkörper 4 bzw. das Ausgleichselement 5 sind im Detail in Fign. 3a,b dargestellt. Der Stützkörper 4 ist gitterförmig ausgebildet und weist drei Längsstreben 7 auf, die jeweils unter einem 107,5°-Winkel zueinander angeordnet sind und miteinander über vier entlang der axialen Erstreckung des Stützkörpers 4 verteilte Ringe 8 verbunden sind. Die Ringe 8 des gitterförmigen Stützkörpers 4 sind an einer Öffnung 9 durchbrochen, die zum Einsetzen des Ausgleichselements 5 dient. Die Öffnung 9 erstreckt sich über die gesamte Länge des Stützkörpers 4 und weist einen Öffnungswinkel von ca. 110° auf. Das Ausgleichselement 5, dessen Durchmesser im Wesentlichen dem Innendurchmesser des Stützkörpers 4 entspricht, kann durch die kleiner dimensionierte Öffnung 9 in den Stützkörper 4 eingesetzt werden, da sich das Ausgleichselement 5 beim Einsetzen in den Stützkörper 4 komprimieren lässt. Durch den verhältnismäßig kleinen Öffnungswinkel der Öffnung 9 ist gewährleistet, dass der Stützkörper 4 seine stützende Funktion trotz der Öffnung 9 gut erfüllen kann.

Das Ausgleichselement 5 wird in dem Stützkörper 4 in axialer Richtung an zwei schwalbenschwanzförmigen Anlageflächen 10a, 10b fixiert, die am obersten bzw. untersten Ring 8 ausgebildet sind. Der Stützkörper 4 mit eingesetztem Ausgleichselement 5 kann an dem Filterelement 2 z.B. durch Kleben oder durch Verrasten mit Hilfe von an dem Stützkörper 4 vorgesehenen Rastnasen befestigt werden. Um in radialer Richtung eine ausreichende Strömungsmöglichkeit für die Flüssigkeit zu erhalten, sind an den Streben 7 in Höhe der Ringe 8 Absätze gebildet, die als Abstandshalter dienen. Die Anordnung aus Filterelement 2, Stützkörper 4 und Ausgleichselement 5 wird durch zwei stirnseitig vorgesehene Endscheiben 11a, 11b zusammengehalten, die an dem Filterelement 4 durch Kleben oder auf andere Weise verbunden werden können.

Nachfolgend wird anhand von Fig. 2 die Funktionsweise der Filtereinrichtung 1 im Einbauzustand in einem Gehäuse beschrieben, welches aus zwei im vorliegenden Fall miteinander verklebten Gehäuseteilen 12a, 12b besteht. Die zu filternde Flüssigkeit, im vorliegenden Fall eine wässrige Harnstofflösung, wird durch einen Einlass 13 am Gehäuseoberteil 12a der Filtereinrichtung 1 zugeführt und gelangt über einen Einlassbereich, der oberhalb des Filterelements 4 angeordnet ist, in einen zwischen dem Gehäuse 12a, 12b und der äußeren Mantelfläche des Filterelements 4 gebildeten Ringraum 14, welcher die Rohseite der Filtereinrichtung 1 bildet. In dem Ringraum 14 ist ein weiteres ringförmiges, zylindrisches Ausgleichselement 15 aus einem elastisch deformierbaren Gummi-Material angeordnet, das an der Innenwand des Gehäuses 12a, 12b anliegt.

Die zu reinigende Flüssigkeit tritt in radialer Richtung durch das Filterelement 4 hindurch und in den Innenraum 3 ein, der die Reinseite der Filtereinrichtung 1 bildet. Die gefilterte Flüssigkeit tritt durch einen sich an den Innenraum 3 in axialer Richtung nach oben anschließenden Austrittsbereich hindurch und verlässt die Filtereinrichtung 1 in radialer Richtung durch einen Auslass 16.

Gefriert die Flüssigkeit in dem Ringspalt 6 des Innenraums 3 bzw. in dem Ringraum 14, so kann der hierbei entstehende Eisdruck durch die Ausgleichselemente 5, 15 aufgenommen werden, indem diese elastisch komprimiert werden. Bei der in Fig. 2 gezeigten Ausführung kann das in dem Innenraum 3 angeordnete, innere Ausgleichselement 5 sowohl in axialer als auch in radialer Richtung komprimiert werden, wohingegen sich das äußere Ausgleichselement 15 nur in radialer Richtung komprimiert wird, da es sich über die gesamte axiale Länge des Ringraums 14 ausdehnt.

Wie aus Fig. 2 ebenfalls ersichtlich, ist es zweckmäßig, wenn die Ausgleichselemente 5, 15 einen großen Teil (zweckmäßiger Weise mehr als 40% bzw. 80%) des Volumens des Innenraums 3 bzw. des Ringraums 14 ausfüllen, da auf diese Weise das dort vorhandene Flüssigkeitsvolumen und damit das beim Gefrieren der Flüssigkeit aufzunehmende zusätzliche Flüssigkeitsvolumen so gering ist, dass dieses vollständig durch eine elastische Kompression der Ausgleichselemente 5, 15 aufgefangen werden kann. Beim anschließenden Auftauen der Flüssigkeit füllen die Ausgleichselemente 5, 15 wieder das ursprünglich (im undeformierten Zustand) eingenommene Volumen aus.

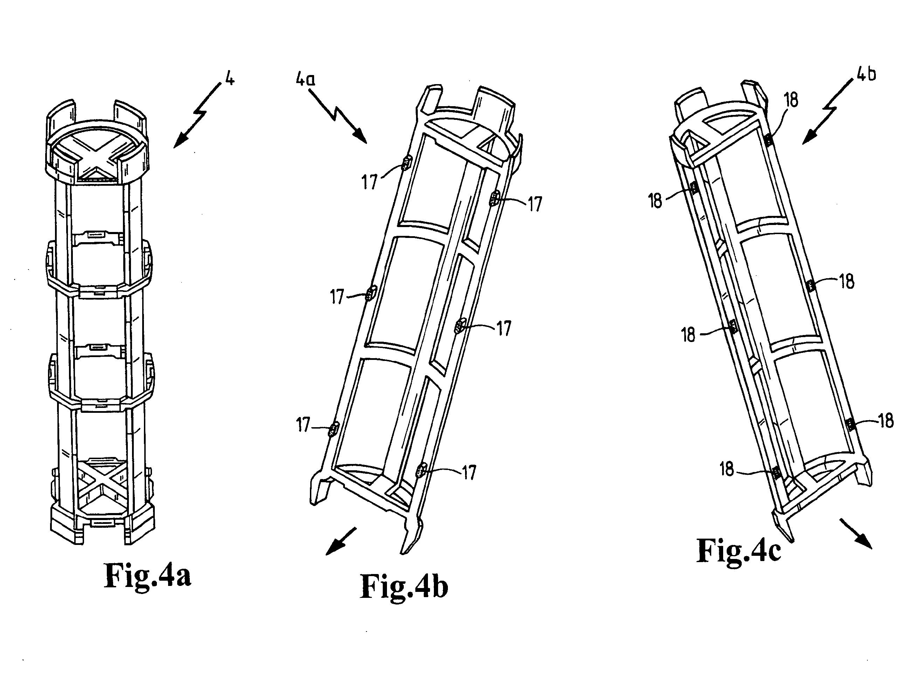

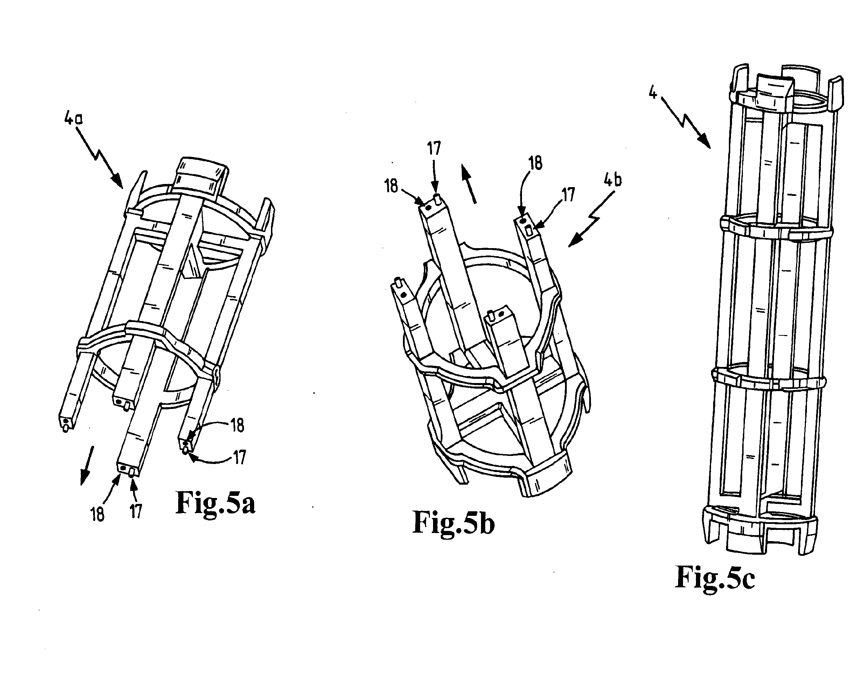

Es versteht sich, dass der Stützkörper nicht wie in Fig. 3a gezeigt einteilig ausgebildet werden muss, sondern dass dieser auch aus zwei (oder mehr) z.B. in radialer Richtung oder in axialer Richtung aneinander befestigbaren Teilstücken 4a, 4b zusammengesetzt werden kann, wie dies in Fign. 4a-c bzw. Fign 5a-c gezeigt ist. Die Teilstücke 4a, 4b können hierbei insbesondere zwei Hälften des Stützkörpers 4 bilden, die aneinander befestigt werden, indem an einem jeweiligen Teilstück 4a, 4b angebrachte Vorsprünge bzw. Nasen 17 mit entsprechend geformten Ausnehmungen bzw. Nuten 18 am jeweils anderen Teilstück 4b, 4a in Eingriff gebracht werden, nachdem das Ausgleichselement 5 zwischen die Teilstücke 4a, 4b eingebracht wurde. Die Nasen bzw. die zugehörigen Nuten können hierbei auf unterschiedliche Weise ausgestaltet sein, z.B. kreis- bzw. zylinderförmig (wie in Fign. 5a,b), länglich, rechteck- bzw. quaderförmig (wie in Fign. 4a,b) oder rippenförmig. Es versteht sich, dass die Nasen 17 auch als Rastnasen ausgebildet sein können. Auch können die Teilstücke 4a, 4b auf andere Weise, z.B. durch Verkleben, unlösbar miteinander verbunden werden.

## Patentansprüche

1. Filtereinrichtung (1) zur Flüssigkeitsfilterung, umfassend:
ein Filterelement (2) mit einem Innenraum (3) zur Aufnahme von Flüssigkeit, sowie ein Ausgleichselement (5) aus elastisch deformierbarem Material zur Aufnahme eines sich beim Gefrieren der Flüssigkeit vergrößernden Flüssigkeitsvolumens, wobei das Ausgleichselement (5) in dem Innenraum (3) angeordnet ist und zwischen dem Ausgleichselement (5) und dem Filterelement (3) ein Spalt (6), insbesondere ein Ringspalt, für die Aufnahme der Flüssigkeit gebildet ist, **dadurch gekennzeichnet, dass** in dem Innenraum (3) ein Stützkörper (4) zur Abstützung des Filterelements (2) angeordnet ist, welcher als rohrförmiger Körper, insbesondere in Form eines Käfigs, ausgebildet ist und das Ausgleichselement zumindest teilweise umschließt.

2. Filtereinrichtung nach Anspruch 1, bei der das Ausgleichselement (5) im undeformierten Zustand mindestens 40 %, bevorzugt mindestens 80 % des Volumens des Innenraums (3) ausfüllt.

3. Filtereinrichtung nach Anspruch 1 oder 2, bei welcher der insbesondere einstückige Stützkörper (4) umfangsseitig eine sich zumindest über einen Teil der axialen Länge des Stützkörpers (4) erstreckende Öffnung (9) zum Einsetzen des Ausgleichselements (5) aufweist.

4. Filtereinrichtung nach Anspruch 3, bei welcher sich die Öffnung (9) in radialer Richtung über einen Winkelbereich von weniger als 270°, bevorzugt von weniger als 130° erstreckt.

5. Filtereinrichtung nach einem der Ansprüche 1 bis 4, bei welcher der Stützkörper (4) aus mindestens zwei insbesondere in axialer Richtung oder in radialer Richtung aneinander befestigten Teilstücken (4a, 4b) zusammengesetzt ist.

6. Filtereinrichtung nach einem der Ansprüche 1 bis 5, bei welcher der Stützkörper (4) an zumindest einer Stirnseite eine Anlagefläche (10a, 10b) für das Ausgleichselement (5) aufweist.

7. Filtereinrichtung nach einem der vorhergehenden Ansprüche, weiter umfassend: ein Gehäuse (12a, 12b), in dem das Filterelement (2) angeordnet ist.

8. Filtereinrichtung nach Anspruch 7, bei der zwischen dem Gehäuse (12a, 12b) und dem Filterelement (2) ein weiteres Ausgleichselement (15) aus elastisch deformierbarem Material angeordnet ist.

9. Filtereinrichtung nach einem der vorhergehenden Ansprüche, bei der das Filterelement (2) als Filterbalg ausgebildet ist.

## Claims

1. Filtering device (1) for filtering liquids, comprising:
a filter element (2) with an interior space (3) for receiving liquid, as well as a compensating element (5) made of elastically deformable material for receiving a liquid volume that increases during freezing of the liquid, wherein the compensating element (5) is disposed in the interior space (3) and a gap (6), in particular an annular gap, is formed between the compensating element (5) and the filter element (3) for receiving the liquid, **characterized in that** a support structure (4) for supporting the filter element (2) is disposed in the interior space (3), which is designed as tubular structure, in particular in the shape of a cage, and encloses the compensating element at least partially.

2. Filtering device according to claim 1, with the compensating element (5) occupying in undeformed state at least 40 %, preferably at least 80 % of the volume of the interior space (3).

3. Filtering device according to claim 1 or 2, with the in particular one-piece support structure (4) featuring circumferentially an opening (9) that extends at least over one section of the axial length of the support structure (4) for inserting the compensating element (5).

4. Filtering device according to claim 3, with the opening (9) extending in radial direction over an angular range of less than 270°, preferably of less than 130°.

5. Filtering device according to one of the claims 1 to 4, with the support structure (4) being combined of at least two, in particular in axial direction or in radial direction, segments (4a, 4b) attached to each other.

6. Filtering device according to one of the claims 1 to 5, with the support structure (4) featuring on at least one front face a contact area (10a, 10b) for the compensating element (5).

7. Filtering device according to one of the above claims, further comprising: a housing (12a, 12b) in which the filter element (2) is disposed.

8. Filtering device according to claim 7, with a further compensating element (15) made of elastically deformable material being disposed between the housing (12a, 12b) and the filter element (2).

9. Filtering device according to one of the above claims, with the filter element (2) being designed as filter bellows.

## Revendications

1. Dispositif de filtration (1) pour la filtration de liquides, comprenant :
un élément filtrant (2) comportant un espace intérieur (3) destiné à réceptionner du liquide, ainsi qu'un élément compensateur (5) constitué d'un matériau élastiquement déformable destiné à réceptionner un volume de liquide augmentant lorsque le liquide gèle, l'élément compensateur (5) étant disposé dans l'espace intérieur (3) et une fente (6), notamment une fente annulaire, étant formée entre l'élément compensateur (5) et l'élément filtrant (3) en vue de réceptionner le liquide, **caractérisé en ce qu'**un élément d'appui (4) destiné à étayer l'élément filtrant (2) est disposé dans l'espace intérieur (3), cet élément filtrant étant exécuté en tant que corps tubulaire, notamment sous forme de cage, et encerclant, au moins partiellement, l'élément compensateur.

2. Dispositif de filtration selon la revendication 1, dans lequel l'élément compensateur (5) remplit, à l'état non déformé, au moins 40 %, de préférence au moins 80 %, du volume de l'espace intérieur (3).

3. Dispositif de filtration selon la revendication 1 ou 2, dans lequel l'élément d'appui (4) en particulier monobloc présente sur sa circonférence une ouverture (9) s'étendant au moins sur une partie de la longueur axiale de l'élément d'appui (4) permettant d'insérer l'élément compensateur (5).

4. Dispositif de filtration selon la revendication 3, dans lequel l'ouverture (9) s'étend en sens radial sur un angle de moins de 270 °, de préférence de moins de 130°.

5. Dispositif de filtration selon l'une des revendications 1 à 4, dans lequel l'élément d'appui (4) est composé d'au moins deux parties (4a, 4b) fixées l'une à l'autre, notamment en sens axial ou en sens radial.

6. Dispositif de filtration selon l'une des revendications 1 à 5, dans lequel l'élément d'appui (4) présente une surface de contact (10a, 10b) pour l'élément compensateur (5) sur au moins une face frontale.

7. Dispositif de filtration selon l'une des revendications précédentes, comprenant également : un boîtier (12a, 12b) dans lequel est disposé l'élément filtrant (2).

8. Dispositif de filtration selon la revendication 7, dans lequel un autre élément compensateur (15) constitué d'un matériau élastiquement déformable est disposé entre le boîtier (12a, 12b) et l'élément filtrant (2).

9. Dispositif de filtration selon l'une des revendications précédentes, dans lequel l'élément filtrant (2) est réalisé en tant que soufflet de filtre.
